# EUROPÄISCHE PATENTSCHRIFT

(11) **EP 2 942 418 B1**
(45) Veröffentlichungstag und Bekanntmachung des Hinweises auf die Patenterteilung: **01.07.2020**
(21) Anmeldenummer: 15163134.8
(22) Anmeldetag: 10.04.2015
(51) Int. Cl.: C22F 1/047, B21D 53/88

(54) **VERFAHREN ZUR HERSTELLUNG EINES KRAFTFAHRZEUGBAUTEILS AUS ALUMINIUM**
METHOD FOR MANUFACTURING A MOTOR VEHICLE PART MADE OF ALUMINIUM
PROCÉDÉ DE FABRICATION D'UN ÉLÉMENT DE VÉHICULE AUTOMOBILE EN ALUMINIUM

(30) Priorität: 10.04.2014 DE 102014105140; 10.06.2014 DE 102014108111
(43) Veröffentlichungstag der Anmeldung: 11.11.2015
(73) Patentinhaber: Benteler Automobiltechnik GmbH, 33102 Paderborn (DE)
(72) Erfinder: Bohner, Friedrich, 33813 Oerlinghausen (DE); Dörr, Jochen, 33104 Bad Driburg (DE); Grewe, Jochem, 33154 Salzkotten (DE); Hielscher, Christian, 33129 Delbrück (DE); Rauscher, Boris, 33100 Paderborn (DE); Tölle, Jörn, 33102 Paderborn (DE)
(74) Vertreter: Griepenstroh, Jörg

(56) Entgegenhaltungen:
- EP-A1- 2 415 895
- JP-A- 2009 148 823
- US-A1- 2010 218 860
- US-B1- 6 550 302
- NIA R. HARRISON ET AL: "Optimization of High-Volume Warm Forming for Lightweight Sheet", SAE TECHNICAL PAPER SERIES, Nr. 2013-01-1170, 8. April 2013 (2013-04-08), Seiten 1-11, XP055215184, US ISSN: 0148-7191, DOI: 10.4271/2013-01-1170

## Beschreibung

Die vorliegende Erfindung betrifft ein Verfahren zur Herstellung eines Kraftfahrzeugbauteils gemäß den Merkmalen im Oberbegriff von Patentanspruch 1.

Aus dem Stand der Technik ist es bekannt, Fahrzeugbauteile sowie Kraftfahrzeugstrukturbauteile aus metallischen Werkstoffen herzustellen. Hierbei wird einer selbsttragenden Kraftfahrzeugkarosserie die notwendige Steifigkeit für den regulären Fahrzeugbetrieb gegeben. In den letzten Jahren sind die Anforderungen an solche Kraftfahrzeugkarosserien jedoch stark gestiegen. Es stand nicht mehr nur die reine Formgebung im Vordergrund, sondern gleichzeitig auch die gezielte Einstellung von Eigenschaften im Falle eines Fahrzeugcrashes sowie konsequenter Leichtbau. Hierzu ist es aus dem Stand der Technik bekannt, Stahlwerkstoffe einzusetzen, mit denen es möglich ist, Bauteile mit hochfesten oder gar höchstfesten Eigenschaften bereitzustellen. Diese hochfesten oder höchstfesten Eigenschaften werden gezielt partiell an den Bauteilen hergestellt.

Alternativ ist es bekannt, Kraftfahrzeugbauteile aus Aluminium herzustellen. Aluminium kommt hierbei als Leichtmetallbauteil zum Einsatz und ermöglicht durch sein geringes spezifisches Eigengewicht eine entsprechende Gewichtsersparnis. Die Herstellung des Aluminiumbauteils für Kraftfahrzeuge ist beispielsweise aus der DE 10 2009 008 282 A1 bekannt.

Weiterhin ist aus SAE International "Optimization of High-Volume Warm Forming for Lightweight Sheet", Nia R. Harrison, die Herstellung von warmumgeformten Aluminiumbauteilen bekannt. Hierzu werden Aluminiumbleche in 180 Sekunden auf 250°C erwärmt und im warmen Zustand umgeformt.

Weiterhin ist aus der US 2010/0218860 A1 die Herstellung eines Kraftfahrzeugbauteils aus einer nicht härtbaren Aluminiumlegierung bekannt. Hier wird eine Aluminiumplatine in 1 bis 60 Sekunden auf 240°C erwärmt und im warmen Zustand umgeformt.

Aufgabe der vorliegenden Erfindung ist es, ausgehend vom Stand der Technik ein Verfahren zur Herstellung eines Kraftfahrzeugbauteils aus einer Leichtmetalllegierung aufzuzeigen, mit dem es verfahrensökonomisch und kostengünstig möglich ist, ein Kraftfahrzeugbauteil zu produzieren.

Die zuvor genannte Aufgabe wird erfindungsgemäß mit einem Herstellungsverfahren gemäß den Merkmalen im Patentanspruch 1 gelöst.

Vorteilhafte Ausführungsvarianten sind Gegenstand der abhängigen Patentansprüche.

Im Rahmen der Erfindung wird eine Aluminiumlegierung mit der Bezeichnung AW/AA5xxx-Hxx verwendet. Es handelt sich dabei bevorzugt um eine kaltverfestigte Aluminiumlegierung, welche insbesondere durch einen vorgeschalteten Walzprozess entsprechend kaltverfestigt ist und optional in Zwischenschritten oder im Nachgang thermisch nachbehandelt worden sein kann. Dabei handelt es sich insbesondere um ein dem erfindungsgemäßen Erwärmen vorgeschaltetes Kaltwalzen. Durch das Kaltwalzen werden Versetzungen im Kristallgitter ausgebildet, so dass die kaltverfestigte Aluminiumlegierung eine Ausgangsdehngrenze zwischen 200 MPa und 450 MPa aufweist, insbesondere 300 MPa bis 450 MPa. Der Festigkeitszustand ist an dem verfestigten Ausgangsmaterial oder aber auch an einem hieraus hergestellten Kraftfahrzeugbauteil durch einen Zugversuch nachweisbar. Insbesondere wird eine Aluminiumlegierung gemäß der europäischen Norm EN515:1993 im Werkstoffzustand H12, H14, H16, H18, H19, H22, H24, H26, H28, H32, H34, H36 oder H38 verarbeitet, welche als Legierungselemente neben Aluminium zumindest Magnesium und gegebenenfalls Mangan sowie weitere Legierungselemente aufweist. Es handelt sich bei der Dehngrenze um die Dehngrenze RP 0,2.

Im Rahmen der Erfindung ist nunmehr vorgesehen, dass eine Platine aus vorgenanntem Material in kurzer Zeit weiterverarbeitet wird, wodurch erfindungsgemäß erreicht wird, dass die mechanischen Eigenschaften, insbesondere die Dehngrenze der Platine im Wesentlichen an einem hieraus durch Warmumformung hergestellten Kraftfahrzeugbauteil partiell nur geringfügige Reduzierungen der Festigkeit vorgenommen werden.

Durch die Warmumformung selbst wird wiederum erreicht, dass die Platine ein kurzzeitig hohes Formänderungsvermögen besitzt. Hierbei kommt es jedoch auch zu einem partiellen Weichglühen derart, dass sich die Versetzungen des Kristallgitters teilweise rückbilden und das Material erweichen würde. Erfindungsgemäß ist somit vorgesehen, dass sowohl in besonders kurzer Zeit von weniger als 20 Sekunden erwärmt wird, daraufhin in einer Zeit von weniger als 20 Sekunden umgeformt wird und weiterhin besonders bevorzugt während oder nach dem Umformen partiell abgeschreckt wird, so dass ebenfalls in unter 20 Sekunden die Abschreckung in den harten Bereichen vollzogen ist.

Hierdurch wird erreicht, dass in weniger als 60, insbesondere weniger als 50, bevorzugt in 30 bis 50 Sekunden die gewünschten harten Bereiche an dem hergestellten Bauteil der Ausgangsdehngrenze der Ausgangsplatine 80 bis 100 % aufweisen, mithin insbesondere eine Dehngrenze zwischen 200 MPa und 450 MPa besitzen. Wird beispielsweise eine Kraftfahrzeugsäule hergestellt, so ist vorgesehen, dass insbesondere Anbindungsbereiche, beispielsweise an einem Dachholm oder an einem unteren Seitenschweller duktil verbleiben, so dass diese im Crashfall nicht brechen oder reißen. Hierzu werden erste Bereiche an dem herzustellenden Bauteil mit aufgewärmt, so dass zunächst die komplette Platine homogen erwärmt ist. Im Umformwerkzeug selbst werden dann erste Bereiche derart geheizt, dass mindestens ein erster Bereich der Platine auf der Umformtemperatur, mithin einer Temperatur zwischen 150°C und 350°C gehalten ist. Während der Umformung wird diese Temperatur auch gehalten aber zunächst nicht aktiv abgekühlt, so dass die Temperatur auch noch nach Abschluss des Umformvorganges in dem hergestellten Bauteil vorhanden ist und dann außerhalb des Werkzeuges abkühlen kann. Mithin wird kein starker Temperaturabfall durch ein aktives Abkühlen herbeigeführt, sondern die Temperatur wird über den Umformzeitraum gehalten, so dass insbesondere der erste Bereich eine Temperatur über 150°C für maximal 60 Sekunden aufweist. Der erste Bereich der Platine sollte erfindungsgemäß eine Temperatur von über 150°C bevorzugt zwischen 5 und 30 Sekunden, insbesondere zwischen 10 und 20 Sekunden aufweisen, um eine ausreichende Entfestigung sicherzustellen. Hierdurch wird in diesem Bereich eine Entfestigung derart vollzogen, dass sich die Versetzungsdichte im Kristallgitter reduziert und eine Dehngrenze in dem ersten Bereich zwischen 40 und 80 % der Ausgangsdehngrenze, insbesondere 120 MPa und 250 MPa eingestellt wird. Dadurch besitzt dann das Bauteil partiell deutlich duktilere Eigenschaften, insbesondere in Anbindungsbereichen oder aber Bereichen die bewusst im Crashfall verformen sollen. Aber auch eine Weiterverarbeitbarkeit des Bauteils kann damit erhöht werden.

Im Rahmen der Erfindung wird zwischen der Dehngrenze des ersten Bereiches und der Dehngrenze des zweiten Bereiches ein Unterschied der Dehngrenze von mehr als 100 MPa eingestellt. Die Dehngrenze ist somit als Delta bzw. Unterschied der Dehngrenzen zwischen den zwei Bereichen zu sehen. Insbesondere liegt die Dehngrenze des zweiten Bereichs zwischen 50 und 150 MPa oberhalb der Dehngrenze des ersten Bereichs des Kraftfahrzeugbauteils.

Weiterhin besonders bevorzugt wird die Platine vor, während oder nach der Umformung beschnitten. Hiermit ist es dann möglich die äußere Bauteilkontur festzulegen.

In einer besonders bevorzugten Ausführungsvariante wird eine Platine mit mindestens zwei voneinander verschiedenen Wandstärken umgeformt. Insbesondere kommt hier ein Tailored Material zum Einsatz, wobei die verschiedenen Wandstärken insbesondere durch ein partielles Abwalzen während des Kaltwalzens hergestellt sind. Dies ist als Tailor Rolled Blank bekannt. Im Rahmen der Erfindung ist es jedoch auch möglich, ein Tailor Welded Blank zu verwenden, mithin eine Platine bei der zwei Blechplatinenteile mit unterschiedlicher Wandstärke thermisch gefügt sind. Hierzu eignet sich insbesondere das Reibrührschweißen, aber auch andere stoffschlüssige Kupplungsverfahren können zum Einsatz kommen. Im Rahmen der Erfindung ist es jedoch auch möglich, eine gepatchte Platine zu verwenden, so dass ein Bauteilpatch auf die Platine aufgebracht wird. Die Platine wird dann zusammen mit dem Bauteilpatch umgeformt. Das Bauteilpatch wird dabei insbesondere mit der Platine verklebt sowie durch mechanische oder thermische Verfahren, wie z.B. Clinchen, Nieten, Reibrührschweißen, Punktschweißen in Position fixiert, wobei der Kleber thermisch aktivierbar ist und bei Erwärmen der Platine auf Umformtemperatur entsprechend mit der Platine zusammen verklebt wird.

Bezüglich der Einstellung der Dehngrenze im fertigen Kraftfahrzeugbauteil beziehen sich die Werte jeweils auf die Grundplatine, das heißt, auf die größere der Platinen, auf die wenigstens eine Patchplatine aufgebracht wurde.

Als Werkstoff für die Patchplatine kann dieselbe Aluminiumlegierung wie für die Grundplatine Verwendung finden. In diesem Fall ist der Ausgangslieferzustand oder die Wärmebehandlung der Patchplatine so zu wählen, dass während der Umformung zumindest das Formänderungsvermögen des korrespondierenden Bereiches der Grundplatine erreicht wird. Das gleiche gilt aber auch bei Einsatz eines anderen Patchwerkstoffes.

Besonders bevorzugt wird bei dem Tailored Material eine Platine mit Dickenvariationen zwischen 1mm und 10mm, insbesondere von 2 mm bis 6 mm Wandstärke umgeformt. Die Platine kann dann zumindest partiell dickere Wandstärken aufweisen, wobei die dickeren Wandstärken zwischen 1 mm und 15 mm, insbesondere zwischen 2 mm und 12 mm und ganz besonders bevorzugt zwischen 3 mm und 10 mm aufweisen und insbesondere bis zu 3 mm dicker sind als die übrigen Bereiche der Platine.

Insbesondere wird mit dem erfindungsgemäßen Verfahren ein Kraftfahrzeugbauteil aus einer Aluminiumlegierung hergestellt, welches im Fall einer Kollision lokal eine, in dessen Auslegung vorausdefinierte, Deformation erfahren soll, wobei das Kraftfahrzeugbauteil weiterhin mit weiteren Verstärkungsteilen gefügt werden kann. Auch die Verstärkungsteile können nach dem erfindungsgemäßen Verfahren hergestellt werden. Die Verstärkungsteile selbst werden nach Abschluss des Umformverfahrens mit dem Kraftfahrzeugbauteil gefügt. Insbesondere handelt es sich dabei um eine Innenverstärkung und/oder eine Außenverstärkung. Die Innenverstärkung kann beispielsweise in Form eines Patches auf das hergestellte Kraftfahrzeugbauteil aufgebracht werden. Im Rahmen der Erfindung ist es jedoch auch möglich, durch die Koppelung mit der Innenverstärkung und/oder der Außenverstärkung ein entsprechendes Hohlbauteil herzustellen. Bei den Verstärkungen handelt es sich insbesondere auch um Aluminiumbauteile. Die Verstärkung kann jedoch auch als Stahlbauteil ausgebildet sein oder aus Faserverbundwerkstoff aufgebracht sein. Besonders bevorzugt wird die Verstärkung mit dem Kraftfahrzeugbauteil verklebt. Das Kleben wird insbesondere mit einem thermischen oder mechanischen Fügeverfahren kombiniert, um die Verstärkung beim Aushärten in Position zu halten. Im Rahmen der Erfindung ist es jedoch auch möglich, dass die beiden Bauteile miteinander thermisch gefügt werden. Auch sind formschlüssige Koppelungsverfahren wie Nieten, insbesondere Stanznieten oder aber ein Clinchvorgang möglich.

Weiterhin besonders bevorzugt wird das Abkühlen in dem zweiten Bereich, sofern die Abkühlung nicht während des Umformvorganges abgeschlossen wird, unmittelbar im Anschluss an das Umformen, in einer Zeit von weniger als 20 Sekunden, insbesondere weniger als 10 Sekunden und besonders bevorzugt weniger 5 Sekunden durchgeführt. Dabei wird erreicht, dass das durch das Kaltwalzen verfestigte Material aufgrund der Erwärmung zur verbesserten Umformbarkeit möglichst nicht oder aber in nur geringer Weise in seiner Festigkeit herabgesetzt wird.

Insbesondere die Bereiche, welche im ersten Kühlvorgang nicht oder nur in geringer Weise abgekühlt wurden, werden nunmehr ebenfalls abgekühlt, insbesondere gezielt abgekühlt, so dass auch in diesen Bereichen eine gewünschte Festigkeit eingestellt wird. Hierzu kann ein zweiter Kühlvorgang in einem separaten Umformwerkzeug oder aber in einem separaten Kühlwerkzeug, oder auch beispielsweise in einem Tauchbecken durchgeführt werden, bevorzugt homogen auf kleiner 120°C. Hierbei kann es sich um ein Werkzeug handeln, welches einen Formhohlraum aufweist, wobei aufgrund von Kühlkanälen das Werkzeug in dem Formhohlraum gekühlt werden kann. Auch ist es im Rahmen der Erfindung möglich, dass für den zweiten Kühlvorgang das gesamte Bauteil in einer separaten, aktiven Kühleinrichtung abgekühlt wird.

Im Rahmen der Erfindung werden die Platine oder das Bauteil weiterhin besonders bevorzugt oberflächenbehandelt. Hierunter ist insbesondere eine Beschichtung, ganz besonders bevorzugt eine Konversionsbeschichtung zu verstehen. Die Oberflächenbehandlung der Platine oder des Bauteils wirkt sich insbesondere vorteilhaft auf die Weiterverarbeitung mit Hinblick auf ein Fügen aus. Aufgrund der Oberflächenbehandlung besitzen die Platine oder das Bauteil, im Gegensatz zur sich unter Umgebungseinfluss selbsttätig bildenden inhomogenen und verunreinigten Oxidschicht, definierte, reproduzierbare Oberflächeneigenschaften. Dies wirkt sich insbesondere positiv auf alle nachfolgenden Fertigungsverfahren aus, welche eine Bindung mit dieser Oberfläche herstellen, wie z.B. Kleben, Lackieren oder zur Stabilisierung des Verfahrens möglichst reproduzierbare Eingangseigenschaften benötigen, wie z.B. Lichtbogenschweißen.

Im Rahmen der Erfindung wird zur Durchführung des Verfahrens insbesondere ein Werkzeug eingesetzt, das verschiedene Abschnitte aufweist, wobei die Abschnitte in dem Werkzeug voneinander verschiedene Temperaturen in Bezug auf ein Erwärmen oder aber Kühlen einnehmen können. Hierdurch sind dann die verschiedenen Temperaturgefälle an der Platine in den dort verschieden zu temperierenden Bereichen realisierbar. Die verschiedenen Abschnitte in dem Umform- bzw. Temperierwerkzeug können beispielsweise durch voneinander unabhängige Temperiersegmente, die insbesondere gegeneinander isoliert sind, ermöglicht werden.

Weitere Vorteile, Merkmale, Eigenschaften und Aspekte der vorliegenden Erfindung werden in der nachfolgenden Beschreibung erläutert sowie in den schematischen Figuren dargestellt. Diese dienen dem einfachen Verständnis der Erfindung. Es zeigen:
- Figur 1a und b: eine Seitenansicht sowie eine Querschnittsansicht einer erfindungsgemäß hergestellten Kraftfahrzeug B-Säule,
- Figur 2a und b: ein Außenverstärkungsblech für eine Kraftfahrzeug B-Säule gemäß Figur 1 und
- Figur 3a bis c: ein Innenverstärkungsblech.

In den Figuren werden für gleiche oder ähnliche Bauteile dieselben Bezugszeichen verwendet, auch wenn eine wiederholte Beschreibung aus Vereinfachungsgründen entfällt.

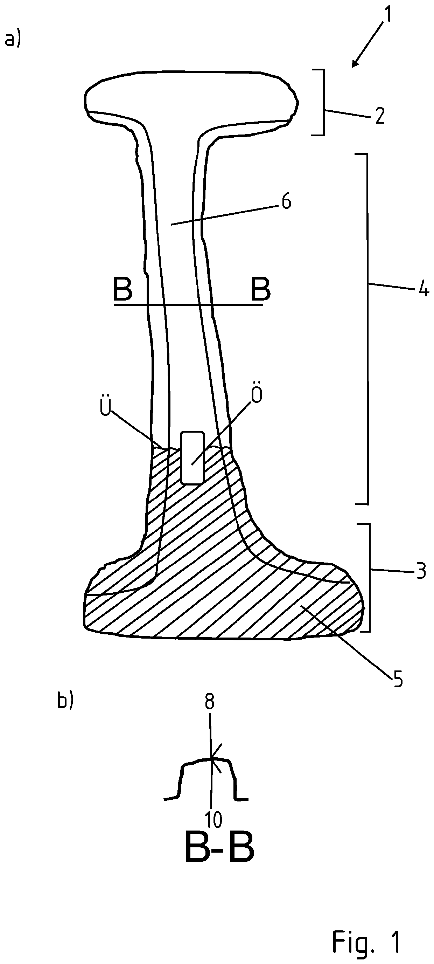

Figur 1a zeigt ein erfindungsgemäßes Kraftfahrzeugbauteil 1 in Form einer B-Säule in Seitenansicht. Die B-Säule weist einen Kopfbereich 2 zur Anbindung an einen nicht näher dargestellten Dachholm sowie einen Fußbereich 3 zur Anbindung an einen nicht näher dargestellten Seitenschweller auf. Zwischen dem Kopfbereich 2 und dem Fußbereich 3 erstreckt sich ein Mittelabschnitt 4 mit einer Öffnung Ö. Erfindungsgemäß ist nunmehr der Fußbereich 3 sowie ein unterer Teil des Mittelabschnittes 4 ausgebildet als erster Bereich 5, der während des Umformens auf der Umformtemperatur gehalten wird, so dass hier ein weicheres bzw. duktileres Gefüge mit bevorzugt zwischen 120 und 250 MPa eingestellt ist. Der obere Mittelabschnitt 4 sowie der Kopfbereich 2 sind hier als zweiter Bereich 6 ausgebildet, der gegenüber dem ersten Bereich 5 härtere Eigenschaften aufweist und eine Dehngrenze zwischen 250 MPa und 450 MPa besitzt. Getrennt sind erster Bereich 5 und zweiter Bereich 6 durch einen Übergang Ü, der sich über 1 mm bis 100 mm, vorzugsweise 15 mm bis 50 mm erstreckt. In Figur 1b ist ein Querschnitt gemäß der Schnittlinie B-B dargestellt, so dass zu erkennen ist, dass während des Umformverfahrens zumindest der Mittelabschnitt 4 in Form eines Hutprofils im Querschnitt ausgebildet wurde. Somit ist das Bauteil dreidimensional geformt worden.

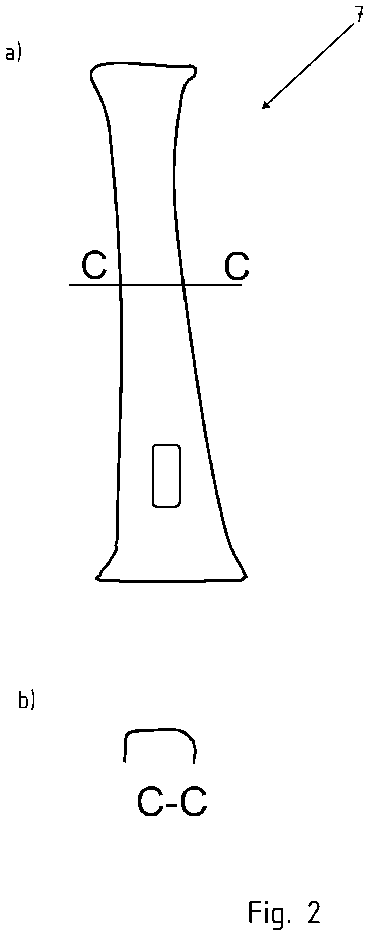

Ferner dargestellt sind in Figur 2a und b ein Außenverstärkungsblech 7 in Seitenansicht sowie in Querschnittsansicht. Das Außenverstärkungsblech 7 weist einen im Wesentlichen homogenen Querschnittsverlauf auf und ist gemäß Figur 2b als U-förmiges Verstärkungsblech ausgebildet. Dieses wird auf die Außenseite 8 gemäß Figur 1b des Kraftfahrzeugbauteils 1 aufgebracht, insbesondere durch Verkleben, besonders bevorzugt mit thermisch aktivierbarem Kleber.

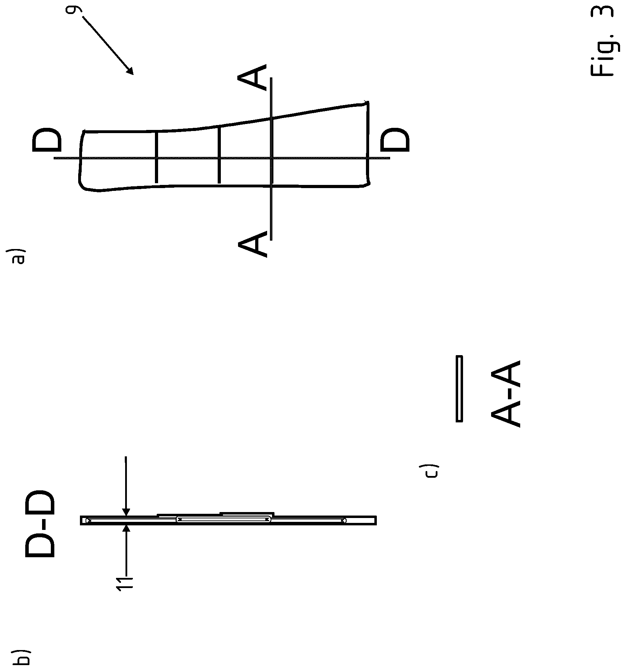

In Figur 3a bis c ist ferner ein Innenverstärkungsblech 9 dargestellt, dass in Figur 3a als Seitenansicht, Figur 3b als Längsschnitt und Figur 3c als Querschnitt dargestellt ist. Das Innenverstärkungsblech 9 wird auf einer Innenseite gemäß Figur 1b der B-Säule angebracht. Das Innenverstärkungsblech 9 weist gemäß Längsschnittlinie D-D partiell voneinander verschiedene Wandstärken 11 im Längsverlauf auf. Der Querschnittsverlauf ist dargestellt in Figur 3c gemäß Schnittlinie A-A, wobei dieser homogen und flach ausgebildet ist. Das Innenverstärkungsblech 9 wird an der Innenseite 10 gemäß Figur 1b aufgebracht, bevorzugt durch Verkleben.

Das Innenverstärkungsblech wird bevorzugt hergestellt aus einer zu einem Profil stranggepressten Aluminiumlegierung, wobei unterschiedliche Wandstärken im Profil eingestellt werden und in einem nachfolgenden Prozessschritt das Profil längs beschnitten, optional flach abgewickelt und/oder auf seine Endform pressgeformt wird.

### Bezugszeichen:

- 1 -: Kraftfahrzeugbauteil
- 2 -: Kopfbereich
- 3 -: Fußbereich
- 4 -: Mittelabschnitt
- 5 -: erster Bereich
- 6 -: zweiter Bereich
- 7 -: Außenverstärkungsblech
- 8 -: Außenseite zu 1
- 9 -: Innenverstärkungsblech
- 10 -: Innenseite zu 1
- 11 -: Wandstärke

- Ö -: Öffnung
- Ü -: Übergang

## Patentansprüche

1. Verfahren zur Herstellung eines Kraftfahrzeugbauteils (1), **gekennzeichnet, durch** folgende Verfahrensschritte:
- Bereitstellen einer Platine aus einer 5000er naturharten Aluminiumlegierung mit einer Ausgangsdehngrenze,
- Vollständiges Erwärmen der Platine auf eine Umformtemperatur zwischen 150°C und 350°C, bevorzugt zwischen 200°C und 300°C in weniger als 20s, bevorzugt weniger als 10s und insbesondere in 2 bis 5s,
- Umformen in einem Umformwerkzeug in weniger als 20s, bevorzugt weniger als 10s und insbesondere zwischen 2 bis 5s, wobei in mindestens einem ersten Bereich der Platine die Temperatur zwischen 150°C und 350°C gehalten wird und in einem zweiten Bereich während oder nach dem Umformen partiell abgeschreckt wird auf eine Temperatur kleiner 250°C, insbesondere kleiner 200°C,
- Einstellen einer Dehngrenze in mindestens einem ersten Bereich (5) kleiner 250 MPa und größer 120 MPa und einer Dehngrenze in einem zweiten Bereich (6) kleiner gleich 450 MPa und größer 200 MPa, wobei die Dehngrenze des zweiten Bereichs (6) mindestens mehr als 100 MPa größer ist als die Dehngrenze des ersten Bereichs (5).

2. Verfahren nach Anspruch 1, **dadurch gekennzeichnet, dass** die Platine oder das Bauteil vor, während oder nach der Umformung beschnitten wird.

3. Verfahren nach Anspruch 1 oder 2, **dadurch gekennzeichnet, dass** eine Platine als Tailor Rolled Blank oder als Tailor Welded Blank mit mindestens zwei voneinander verschiedenen Wandstärken (11) umgeformt wird.

4. Verfahren nach einem der vorhergehenden Ansprüche, **dadurch gekennzeichnet, dass** eine Kraftfahrzeugsäule aus Aluminium hergestellt wird, wobei die Kraftfahrzeugsäule mit einem Innenverstärkungsblech (9) und/oder einem Außenverstärkungsblech (7) gekoppelt wird, insbesondere verklebt wird, wobei besonders bevorzugt der Kleber thermisch aktivierbar ist.

5. Verfahren nach einem der vorhergehenden Ansprüche, **dadurch gekennzeichnet, dass** das Abkühlen in weniger als 20s, bevorzugt weniger als 10s und insbesondere zwischen 2 und 5s durchgeführt wird.

6. Verfahren nach einem der vorhergehenden Ansprüche, **dadurch gekennzeichnet, dass** ein zweiter Kühlvorgang durchgeführt wird, zumindest partiell auf eine Temperatur zwischen 120°C und 200°C.

7. Verfahren nach dem vorhergehenden Anspruch, **dadurch gekennzeichnet, dass** der zweite Kühlvorgang in einem separaten Kühlwerkzeug durchgeführt wird, wobei der zweite Kühlvorgang in weniger als 20s, bevorzugt weniger als 10s und insbesondere zwischen 2 und 5s durchgeführt wird.

8. Verfahren nach einem der vorhergehenden Ansprüche, **dadurch gekennzeichnet, dass** die Platine oder das Kraftfahrzeugbauteil (1) oberflächenbehandelt wird, bevorzugt wird die Platine oder das Kraftfahrzeugbauteil (1) beschichtet und insbesondere konversionsbeschichtet.

9. Verfahren nach einem der vorhergehenden Ansprüche, **dadurch gekennzeichnet, dass** das Kraftfahrzeugbauteil (1) aus einer Platine mit mindestens einem aufgebrachten Patch gefertigt wird.

## Claims

1. Method for producing a motor vehicle component (1), **characterised by** the following method steps:
- providing a blank composed of a 5000 grade naturally hard aluminium alloy with an initial yield strength,
- completely heating the blank to a forming temperature between 150°C and 350°C, preferably between 200°C and 300°C in less than 20 s, preferably in less than 10 s and in particular in 2 to 5 s,
- performing forming in a forming tool in less than 20 s, preferably in less than 10 s and in particular between 2 to 5 s, wherein the temperature is held between 150°C and 350°C in at least one first region of the blank, and partial quenching to a temperature lower than 250°C, in particular lower than 200°C, is performed in a second region during or after the forming,
- generating a yield strength in at least one first region (5) of less than 250 MPa and greater than 120 MPa and a yield strength in a second region (6) of less than or equal to 450 MPa and greater than 200 MPa, wherein the yield strength of the second region (6) is at least 100 MPa greater than the yield strength of the first region (5).

2. Method according to claim 1, **characterised in that** the blank or component is trimmed before, during or after the forming.

3. Method according to claim 1 or 2, **characterised in that** a blank is deformed as a tailor-rolled blank or as a tailor-welded blank having at least two mutually different wall thicknesses (11).

4. Method according to any of the preceding claims, **characterised in that** a motor vehicle pillar composed of aluminium is produced, wherein the motor vehicle pillar is coupled, in particular adhesively bonded, to an inner reinforcement panel (9) and/or an outer reinforcement panel (7), wherein the adhesive is most preferably thermally activatable.

5. Method according to any of the preceding claims, **characterised in that** the cooling is performed in less than 20 s, preferably less than 10 s and in particular between 2 and 5 s.

6. Method according to any of the preceding claims, **characterised in that** a second cooling process is performed, at least partially, to a temperature between 120°C and 200°C.

7. Method according to any of the preceding claims, **characterised in that** the second cooling process is performed in a separate cooling tool, wherein the second cooling process is performed in less than 20 s, preferably less than 10 s and in particular between 2 and 5 s.

8. Method according to any of the preceding claims, **characterised in that** the blank or the motor vehicle component (1) is subjected to surface treatment, the blank or the motor vehicle component (1) is preferably coated and in particular conversion-coated.

9. Method according to any of the preceding claims, **characterised in that** the motor vehicle component (1) is manufactured from a blank with at least one applied patch.

## Revendications

1. Procédé de fabrication d'une pièce d'automobile (1), **caractérisé par** les étapes de procédé suivantes :
- préparation d'un flan en un alliage d'aluminium de dureté naturelle de la série 5000 avec une limite d'allongement initiale,
- chauffage complet du flan à une température de mise en forme comprise entre 150 °C et 350 °C, de préférence entre 200 °C et 300 °C en moins de 20 secondes, de préférence en moins de 10 secondes et en particulier en 2 à 5 secondes,
- mise en forme dans un outil de mise en forme en moins de 20 secondes, de préférence en moins de 10 secondes et en particulier en 2 à 5 secondes, lors de laquelle la température dans au moins une première zone du flan est maintenue entre 150 °C et 350°C et dans une deuxième zone, pendant ou après la mise en forme, est partiellement brusquement refroidie à une température inférieure à 250°C, en particulier inférieure à 200°C,
- réglage d'une limite d'allongement dans au moins une première zone (5) inférieure à 250 MPa et supérieure à 120 MPa et d'une limite d'allongement dans une deuxième zone (6) inférieure ou égale à 450 MPa et supérieure à 200 MPa, la limite d'allongement de la deuxième zone (6) étant plus grande d'au moins 100 MPa que la limite d'allongement de la première zone (5).

2. Procédé selon la revendication 1, **caractérisé en ce que** le flan ou la pièce sont découpés avant, pendant ou après la mise en forme.

3. Procédé selon la revendication 1 ou 2, **caractérisé en ce qu'**un flan est mis en forme comme flan laminé sur mesure c'est-à-dire Tailor Rolled Blank ou comme flan soudé sur mesure c'est-à-dire Tailor Welded Blank avec au moins deux épaisseurs (11) différentes l'une de l'autre.

4. Procédé selon l'une quelconque des revendications précédentes, **caractérisé en ce qu'**un montant de véhicule automobile est fabriqué en aluminium, lequel montant de véhicule automobile est couplé, en particulier collé, à une tôle de renfort intérieure (9) et/ou à une tôle de renfort extérieure (7), la colle pouvant être activée en particulier et de préférence thermiquement.

5. Procédé selon l'une quelconque des revendications précédentes, **caractérisé en ce que** le refroidissement est effectué en moins de 20 secondes, de préférence en moins de 10 secondes et en particulier en 2 à 5 secondes.

6. Procédé selon l'une quelconque des revendications précédentes, **caractérisé en ce qu'**une deuxième opération de refroidissement est effectuée, au moins partiellement à une température comprise entre 120 °C et 200°C.

7. Procédé selon la revendication précédente, **caractérisé en ce que** la deuxième opération de refroidissement est effectuée dans un outil de refroidissement séparé, laquelle deuxième opération de refroidissement est effectuée en moins de 20 secondes, de préférence en moins de 10 secondes et en particulier en 2 à 5 secondes.

8. Procédé selon l'une quelconque des revendications précédentes, **caractérisé en ce que** le flan ou la pièce de véhicule automobile (1) subit un traitement de surface, lequel flan ou laquelle pièce de véhicule automobile (1) est de préférence revêtu et en particulier revêtu par conversion.

9. Procédé selon l'une quelconque des revendications précédentes, **caractérisé en ce que** la pièce de véhicule automobile (1) est fabriquée à partir d'un flan avec au moins un patch appliqué.
